(19) **Europäisches Patentamt European Patent Office Office européen des brevets**

(11) **EP 4 397 468 B1**

(12) **EUROPEAN PATENT SPECIFICATION**

(45) Date of publication and mention of the grant of the patent:
**28.01.2026 Bulletin 2026/05**

(21) Application number: **22863963.9**

(22) Date of filing: **01.06.2022**

(51) International Patent Classification (IPC):
**B29C 45/76** (2006.01)      **B29C 45/78** (2006.01)

(52) Cooperative Patent Classification (CPC):
**B29C 45/76; B29C 45/766; B29C 45/78;**
B29C 2045/7606; B29C 2945/76187;
B29C 2945/7619; B29C 2945/76367

(86) International application number:
**PCT/JP2022/022335**

(87) International publication number:
**WO 2023/032375 (09.03.2023 Gazette 2023/10)**

(54) **METHOD FOR ADJUSTING MOLDING CONDITION PARAMETERS, COMPUTER PROGRAM, DEVICE FOR ADJUSTING MOLDING CONDITION PARAMETERS, AND MOLDING MACHINE**

VERFAHREN ZUR EINSTELLUNG VON FORMBEDINGUNGSPARAMETERN, COMPUTERPROGRAMM, VORRICHTUNG ZUR EINSTELLUNG VON FORMBEDINGUNGSPARAMETERN UND FORMMASCHINE

PROCÉDÉ DE RÉGLAGE DE PARAMÈTRES DE CONDITION DE MOULAGE, PROGRAMME INFORMATIQUE, DISPOSITIF DE RÉGLAGE DE PARAMÈTRES DE CONDITION DE MOULAGE ET MACHINE DE MOULAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2021 JP 2021141522**

(43) Date of publication of application:
**10.07.2024 Bulletin 2024/28**

(73) Proprietor: **The Japan Steel Works, Ltd. Tokyo 141-0032 (JP)**

(72) Inventors:
• **AKAGI, Takashi**
  **Tokyo 141-0032 (JP)**
• **SAEKI, Akihiko**
  **Tokyo 141-0032 (JP)**
• **HIRANO, Takayuki**
  **Tokyo 141-0032 (JP)**

(74) Representative: **Simmons & Simmons LLP (Munich)**
**Lehel Carré**
**Gewürzmühlstraße 11**
**80538 Munich (DE)**

(56) References cited:
**JP-A- 2020 163 825      JP-A- 2021 066 084**
**JP-A- H06 210 694       JP-A- S63 132 020**
**US-A1- 2019 039 274     US-A1- 2020 307 055**
**US-A1- 2022 402 183**

**Description**

[Technical Field]

The present disclosure relates to a molding condition parameter adjustment method, a computer program, a molding condition parameter adjustment device, and a molding machine.

[Background Art]

There is an injection molding machine system that can appropriately adjust a molding condition parameter of an injection molding machine using reinforcement learning (for example, JP2019-166702 and JP2021-066084).

[Summary of Invention]

[Problems to be Solved by Invention]

However, no consideration has been given to a mutual relationship between a plurality of molding condition parameters adjusted in a molding process cycle.

Normally, when a reinforcement learner adjusts a molding condition parameter, a plurality of molding condition parameters is usually changed at the same time. However, some molding condition parameters cause problems when the molding condition parameters are changed at the same time. For example, in an injection molding machine, there is a mutual relationship between a weighing completion position (a screw position at the time of completion of weighing) and an injection speed switching position (a screw position at which an injection speed is switched in the middle of an injection process). When molding condition parameters of the weighing completion position and the injection speed are changed at the same time, a problem arises. When the molding condition parameters of the weighing completion position and the injection speed are changed at the same time after completion of weighing of a molding material in a certain molding process cycle, even though an actual screw position at a current time when weighing is completed does not change, setting of an appropriate switching position is reflected in a weighing completion position when weighing is completed in a next molding process cycle.

Therefore, during injection in the next molding process cycle, injection is performed under a molding condition in which setting of a switching position of an injection speed has been changed even though an actual screw position has not changed, and there is concern that unexpected defects may occur. In the worst case, there is concern that a mold may be damaged.

An object of the disclosure is to provide a molding condition parameter adjustment method, a computer program, a molding condition parameter adjustment device, and a molding machine capable of adjusting a plurality of molding condition parameters of a molding machine in a molding process cycle in an appropriate order and timing considering a mutual relationship between a plurality of molding process parameters.

[Means for Solving Problems]

A method of adjusting a molding condition parameter according to this aspect determines change timings of a plurality of parameters with reference to timing information when change values of a plurality of molding condition parameters are changed in a molding process cycle, and sequentially changes the plurality of parameters.

A computer program according to this aspect causes a computer to perform processes of determining change timings of a plurality of parameters with reference to timing information when change values of a plurality of molding condition parameters are changed in a molding process cycle, and sequentially changing the plurality of parameters.

A molding condition parameter adjustment device according to this aspect determines change timings of a plurality of parameters with reference to timing information when change values of a plurality of molding condition parameters are changed in a molding process cycle, and sequentially changes the plurality of parameters.

A molding machine according to this aspect includes the molding condition parameter adjustment device.

[Effects of Invention]

According to the disclosure, a plurality of molding condition parameters of a molding machine in a molding process cycle can be adjusted in an appropriate order and timing.

[Brief Description of Drawings]

FIG. 1 is a schematic diagram describing a configuration example of an injection molding machine according to a first embodiment.
FIG. 2 is a block diagram illustrating a configuration example of a molding condition parameter adjustment device according to the first embodiment.
FIG. 3A is a conceptual diagram illustrating a configuration of a table according to the first embodiment.
FIG. 3B is a conceptual diagram illustrating a configuration of a table according to the first embodiment.
FIG. 4 is a functional block diagram of the injection molding machine according to the first embodiment.
FIG. 5 is a flowchart illustrating a processing procedure of a processor according to the first embodiment.
FIG. 6A is an explanatory diagram illustrating effects of a molding condition parameter adjustment method according to the first embodiment.
FIG. 6B is an explanatory diagram illustrating effects of the molding condition parameter adjustment method according to the first embodiment.

[Mode for Carrying out Invention]

Specific examples of a molding condition parameter adjustment method, a computer program, a molding condition parameter adjustment device, and a molding machine according to embodiments of the present invention will be described below with reference to the drawings. At least some of the embodiments described below may be arbitrarily combined. Note that the invention is not limited to these examples, is indicated by the scope of the claims, and is intended to include all changes within the meaning and scope equivalent to the scope of the claims.

<Overall configuration of injection molding machine>

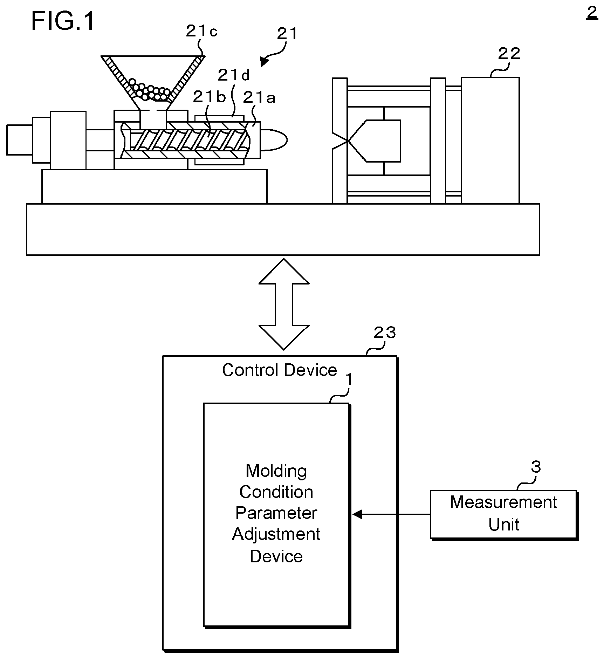

FIG. 1 is a schematic diagram describing a configuration example of an injection molding machine 2 according to a first embodiment. The injection molding machine (molding machine) 2 according to the first embodiment has an injection unit 21, a clamping device 22 disposed in front of the injection unit 21, and a molding condition parameter adjustment device 1, and includes a control device 23 that controls an operation of the injection molding machine 2, and a measurement unit 3. Note that the measurement unit 3 may be configured separately from the injection molding machine 2, or may be configured to be incorporated into the injection unit 21, etc.
The injection unit 21 includes a heating cylinder 21a having a nozzle at a tip thereof, and a screw 21b provided inside the heating cylinder so that the screw 21b can be driven in a rotational direction and an axial direction. The injection unit 21 includes a rotary motor that drives the screw 21b in the rotational direction, a motor that drives the screw 21b in the axial direction, etc. The injection unit 21 is provided with a hopper 21c for supplying a resin molding material to the heating cylinder 21a, and a heater 21d for heating and plasticizing the resin molding material supplied to the heating cylinder 21a.
The clamping device 22 includes a toggle mechanism that opens and closes the mold and clamps the mold so that the mold does not open when the mold is filled with a molten molding material injected from the injection unit 21, and a motor that drives the toggle mechanism. The clamping device 22 includes an ejector pin and an ejector plate for ejecting a molded product.
The control device 23 is a device or circuit that controls operations of the injection unit 21 and the clamping device 22. The control device 23 according to the first embodiment includes the molding condition parameter adjustment device 1. The molding condition parameter adjustment device 1 is a device that adjusts a plurality of molding condition parameters set in the injection molding machine 2. For example, the molding condition parameter adjustment device 1 according to the first embodiment has a function to adjust the molding condition parameters so that defectiveness of the molded product is reduced.
A molding condition parameter that defines a molding condition is set in the injection molding machine 2, and the machine operates according to the molding condition parameter. The molding condition parameter includes, for example, a resin temperature in the mold, a nozzle temperature, a cylinder heating temperature, a hopper temperature, a mold clamping force, an injection speed, injection acceleration, injection peak pressure, injection stroke, etc. Further, the molding condition parameter includes, for example, cylinder tip resin pressure, a seated state of a reverse prevention ring, holding pressure switching pressure, a holding pressure switching speed, a holding pressure switching position, and a holding pressure completion position. Furthermore, the molding condition parameter includes, for example, a cushion position, weighing back pressure, weighing torque, a weighing completion position, a screw retraction speed, a cycle time, a mold closing time, an injection time, a holding pressure time, a weighing time, a mold opening time, etc. An optimal molding condition parameter varies depending on the environment of the injection molding machine 2 and the molded product.

The measurement unit 3 is a device that measures physical quantities related to actual molding when molding is performed by the injection molding machine 2. The measurement unit 3 outputs physical quantity data obtained through a measurement process to the molding condition parameter adjustment device 1. Physical quantities include temperature, position, speed, acceleration, current, voltage, pressure, time, image data, torque, force, strain, power consumption, etc.

Information measured by the measurement unit 3 includes, for example, molded product information, molding machine information, peripheral equipment information, atmosphere information, etc. The peripheral equipment is equipment included in a system that operates in conjunction with the injection molding machine 2, and includes the clamping device 22 or the mold. The peripheral equipment is, for example, a molded product take-out device (robot), an insert insertion device, a nest insertion device, a foil feed device for in-mold molding, a hoop feed device for hoop molding, a gas injection device for gas-assisted molding, etc. The peripheral equipment is, for example, a gas injection device for foam molding using supercritical fluid, a long fiber injection device, a LIM molding material mixing device, a deburring device for molded products, a runner cutting device, etc. The peripheral equipment is, for example, a molded product weight scale, a molded product strength tester, an optical inspection device for molded products, a molded product photographing device and an image processing device, a molded product transport robot, etc.

The molded product information includes, for example, information such as a camera image obtained by imaging the molded product, the amount of deformation of the molded product obtained by a laser displacement sensor, optical measurement values such as chromaticity and brightness of the molded product obtained by an optical measuring instrument, the weight of the molded product measured by a weighing scale, and strength of the molded product measured with a strength measuring device. The molded product information expresses whether the molded product is normal or not, a type of defect, and a degree of defect, and is also used to calculate a reward.

The molding machine information includes information such as a resin temperature inside the mold, a nozzle temperature, a cylinder temperature, and a hopper temperature obtained by measurement using a thermometer, a pressure gauge, a speed meter, an acceleration meter, a position sensor, a timer, a weight scale, etc. The molding machine information includes information such as a mold clamping force, an injection speed, injection acceleration, injection peak pressure, injection stroke, cylinder tip resin pressure, a seated state of a reverse prevention ring, and holding pressure switching pressure. The molding machine information includes information such as a holding pressure switching speed, a holding pressure switching position, a holding completion position, a cushion position, weighing back pressure, weighing torque, a weighing completion position, a screw retraction speed, a cycle time, a mold closing time, an injection time, a holding pressure time, a weighing time, and a mold opening time.

The peripheral equipment information includes information such as a mold temperature set as a fixed value, a mold temperature set as a variable value, and the amount of pellets supplied, which are obtained by measurement using a thermometer, a measuring instrument, etc.

The atmosphere information includes information such as an atmospheric temperature, an atmospheric humidity, and information related to convection (Reynold's number, etc.) obtained using a thermometer, a hygrometer, a flow meter, etc.

The measurement unit 3 may also measure the amount of mold opening, the amount of backflow, the amount of tie bar deformation, and a heater heating rate.

<Molding condition parameter adjustment device>

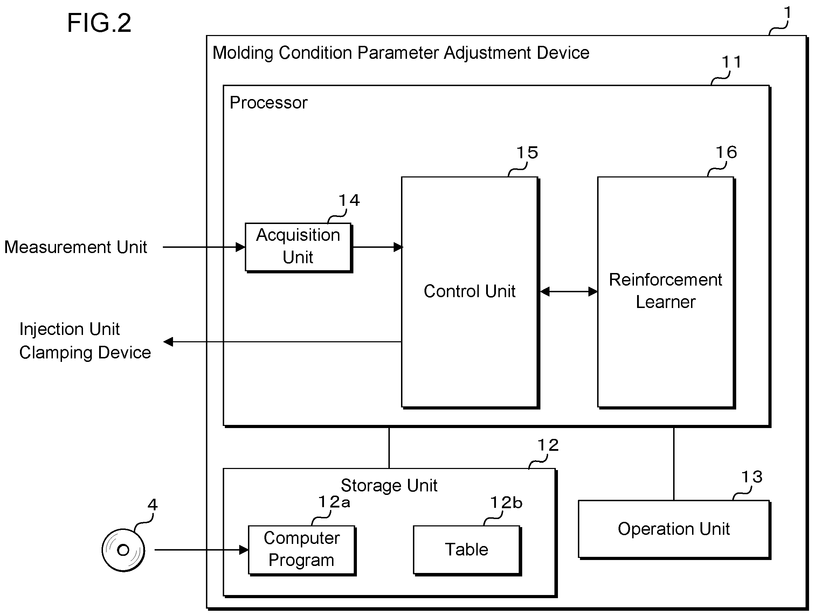

FIG. 2 is a block diagram illustrating a configuration example of the molding condition parameter adjustment device 1 according to the first embodiment. The molding condition parameter adjustment device 1 is a computer, and includes a processor 11, a storage unit (storage) 12, an operation unit 13, etc. as a hardware configuration.

Note that the molding condition parameter adjustment device 1 may be a server device connected to a network (not illustrated). In addition, the molding condition parameter adjustment device 1 may be configured using a plurality of computers to perform distributed processing, may be realized by a plurality of virtual machines installed in one server, or may be realized using a cloud server.

The processor 11 has arithmetic circuits such as a CPU (Central Processing Unit), a multi-core CPU, a GPU (Graphics Processing Unit), a GPGPU (General-purpose computing on graphics processing units), a TPU (Tensor Processing Unit), an ASIC (Application Specific Integrated Circuit), an FPGA (Field-Programmable Gate Array), and an NPU (Neural Processing Unit), internal storage devices such as a ROM (Read Only Memory) and a RAM (Random Access Memory), I/O terminals, etc. The processor 11 functions as an acquisition unit 14, a control unit 15, and a reinforcement learner 16 by executing a computer program (program product) 12a stored in the storage unit 12, which will be described later. Note that each functional unit of the molding condition parameter adjustment device 1 may be realized in software, or may be partially or entirely realized in hardware.

The storage unit 12 is a nonvolatile memory such as a hard disk, an EEPROM (Electrically Erasable Programmable ROM), or a flash memory. The storage unit 12 stores a computer program 12a for causing a computer to execute reinforcement learning processing of the reinforcement learner 16 and adjustment processing for molding condition parameters. Further, when change values of a plurality of molding condition parameters are determined, the storage unit 12 stores a table 12b that stores information indicating a sequence relationship of optimal change timings of the plurality of parameters in a molding process cycle.

<Table (timing information)>

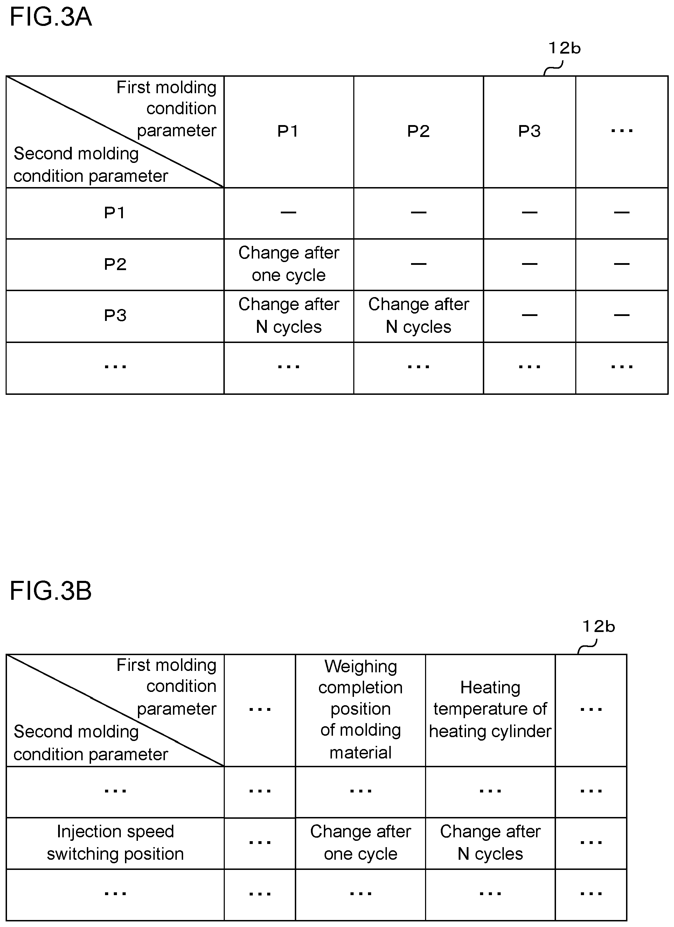

FIGS. 3A and 3B are conceptual diagrams illustrating a configuration of the table 12b according to the first embodiment. FIG. 3A conceptually illustrates the table 12b indicating a sequence relationship of optimal change timings of the plurality of parameters in a molding process cycle.

As illustrated in FIG. 3A, the table 12b associates and stores a first molding condition parameter, a second molding condition parameter, and data indicating a sequence relationship of timings of changing the first and second molding condition parameters. The sequence relationship of the timings of changing the molding condition parameter is determined for each molding process cycle. That is, when the first molding condition parameter is changed in an nth cycle of the molding process cycle, the table 12b stores data indicating that the second molding condition parameter is changed in an (n+$\Delta$n)th cycle. n and $\Delta$n are integers.

FIG. 3B is a specific example of the table 12b illustrated in FIG. 3A, and conceptually illustrates the table 12b indicating a sequence relationship of change timings of the weighing completion position of the molding material, the injection speed switching position, etc. in the molding process cycle.

For example, the table 12b associates and stores the weighing completion position of the molding material, the switching position of the injection speed, and change timing data. The change timing data indicates that the weighing completion position is changed first, and the injection speed is changed in a molding process cycle that is one molding process cycle after the molding process cycle in which the weighing completion position is changed.

Further, the table 12b associates and stores the heating temperature of the heating cylinder 21a, the injection speed switching position, and change timing data. The change timing data indicates that the heating temperature of the heating cylinder 21a is changed first, and the injection speed is changed in a molding process cycle a predetermined number of times after the molding process cycle in which the heating temperature is changed.

The computer program 12a according to the first embodiment may be recorded on a recording medium 4 in a computer-readable manner. The storage unit 12 stores the computer program 12a read from the recording medium 4 by a reading device (not illustrated). The recording medium 4 is a semiconductor memory such as a flash memory. Further, the recording medium 4 may be an optical disc such as a CD (Compact Disc)-ROM, a DVD (Digital Versatile Disc)-ROM, or a BD (Blu-ray (registered trademark) Disc). Furthermore, the recording medium 4 may be a flexible disk, a magnetic disk such as a hard disk, a magneto-optical disk, etc. Furthermore, the computer program 12a according to the first embodiment may be downloaded from an external server (not illustrated) connected to a communication network (not illustrated) and stored in the storage unit 12.

The operation unit 13 is an input device such as a touch panel, soft keys, hard keys, a keyboard, or a mouse.

The acquisition unit 14 acquires physical quantity data measured by the measurement unit 3 when molding is executed by the injection molding machine 2 in the molding process cycle, and output. The acquisition unit 14 outputs the acquired physical quantity data to the control unit 15.

The control unit 15 and the reinforcement learner 16 adjust the molding condition parameters based on the physical quantity data output from the measurement unit 3 in the molding process cycle, and control operations of the injection unit 21 and the clamping device 22 using the adjusted molding condition parameters.

An outline of the molding process cycle is as follows, and the molding condition parameter adjustment device 1 adjusts the molding condition parameters in the repeated molding process cycle. During injection molding, the well-known eject retraction process, mold closing process, mold clamping process, injection process, pressure holding process, weighing process, mold opening process, and eject advance process are sequentially performed.

<Functional blocks of injection molding machine>

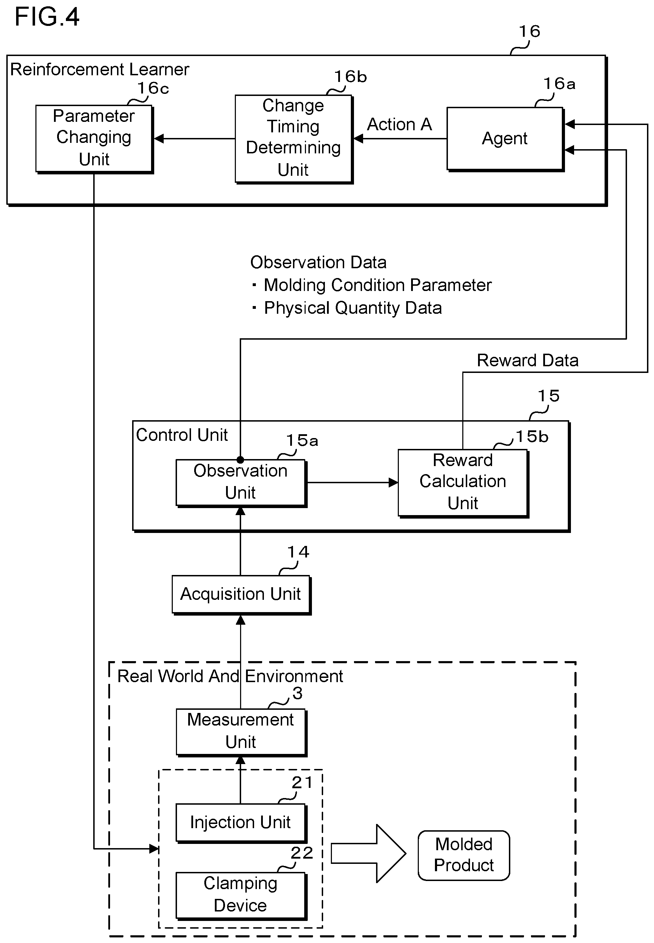

FIG. 4 is a functional block diagram of the injection molding machine 2 according to the first embodiment. As illustrated in FIG. 4, the control unit 15 includes an observation unit 15a and a reward calculation unit 15b. Physical quantity data acquired from the measurement unit 3 via the acquisition unit 14 is input to the observation unit 15a.

The observation unit 15a observes states of the injection molding machine 2 and the molded product by analyzing physical quantity data, and outputs observation data obtained by observation to an agent 16a of the reinforcement learner 16. Since the physical quantity data has a large amount of information, it is preferable that the observation unit 15a generate observation data by compressing information of the physical quantity data as necessary. The observation data is information indicating the state of the injection molding machine 2, the state of the molded product, etc. Further, the observation data preferably includes a molding condition parameter set in the control device 23.

For example, the observation unit 15a calculates observation data indicating a feature amount indicating an external feature of the molded product, dimensions, area, and volume of the molded product, the amount of optical axis deviation of an optical part (molded product), etc. based on a camera image and a measurement value of the laser displacement sensor. Further, the observation unit 15a preferably performs preprocessing on time-series waveform data such as injection speed, injection pressure, holding pressure, etc., and extracts a feature amount of the time-series waveform data as observation data. Note that time-series data of a time-series waveform or image data representing a time-series waveform may be used as observation data.

Furthermore, the observation unit 15a calculates defectiveness of the molded product by analyzing physical quantity data, and outputs the calculated and obtained defectiveness to the reward calculation unit 15b. Examples of the defectiveness include the area of burrs, the area of shorts, the amount of deformation such as sink marks, warping, and twisting, a length of a weld line, a size of a silver streak, a degree of jetting, a size of a flow mark, the amount of change of color due to uneven coloring, etc. Moreover, the defectiveness may be the amount of change in observation data obtained from the molding machine from observation data serving as a criterion for non-defective products.

The reward calculation unit 15b calculates reward data serving as a criterion for quality of a molding condition parameter based on the defectiveness output from the observation unit 15a, and outputs the calculated reward data to the agent 16a of the reinforcement learner 16.

As illustrated in FIG. 4, the reinforcement learner 16 includes the agent 16a, a change timing determining unit 16b, and a parameter changing unit 16c.

The agent 16a is, for example, a reinforcement learning model having a deep neural network such as DQN, A3C, or D4PG, or a model-based reinforcement learning model such as PlaNet or SLAC.

In the case of a reinforcement learning model having a deep neural network, the agent 16a includes a DQN (Deep Q-Network), and determines an action a corresponding to a state s of the injection molding machine 2 indicated by observation data based on the state s. The DQN is a neural network model that outputs a value of each of a plurality of actions a when a state s indicating observation data is input. The plurality of actions a corresponds to change values of the molding condition parameters. A change value may be a value of a molding condition parameter after change, or may be the amount of change in a molding condition parameter. Here, it is assumed that action a is a molding condition parameter value. In the first embodiment, the change value is described as a value of a molding condition parameter. An action having a high value represents an appropriate molding condition parameter to be set in injection molding machine 2. The action a causes the injection molding machine 2 to transition to another state. After state transition, the agent 16a receives a reward calculated by the reward calculation unit 15b, and trains the agent 16a so that a profit, that is, accumulation of rewards is maximized.

More specifically, the DQN has an input layer, an intermediate layer, and an output layer. The input layer includes a plurality of nodes to which the state s, that is, observation data is input. The output layer includes a plurality of nodes that corresponds to a plurality of actions a, respectively, and outputs a value Q(s, a) of a corresponding action a in an input state s.

The DQN of the agent 16a can be reinforcement-trained by adjusting various weighing coefficients characterizing the DQN using the value Q expressed by the following formula (1) as training data based on a state s, an action a, and a reward obtained by the action.

$$Q(s, a) \leftarrow Q(s, a) + \alpha(r + \gamma \max Q(snext, anext) - Q(s, a)) \ldots (1)$$

where

s: state
a: action
$\alpha$: learning coefficient
r: reward
$\gamma$: discount rate
maxQ(snext, anext): maximum value among Q-values for next possible action

In the case of a model-based reinforcement learning model, the agent 16a is provided with a state representation map and uses the state representation map as a guide for action determination to determine a molding condition parameter (action a). Using the state representation map, the agent 16a determines a molding condition parameter (action a) corresponding to the state s of the injection molding machine 2 indicated by the observation data based on the state s.

For example, the state representation map is a model in which, when observation data (state s) and a molding condition parameter (action a) are input, a reward r for taking the molding condition parameter (action a) in the state s and a probability (certainty) Pt of state transition to a next state s' are output. The reward r can be regarded as information indicating whether or not a molded product obtained when a certain molding condition parameter (behavior a) is set in the state s is normal. In the case of being in the state, the action a is a molding condition parameter that needs to be set in the injection molding machine 2. The action a causes the injection molding machine 2 to transition to another state. After the state transition, the agent 16a receives a reward calculated by the reward calculation unit 15b and updates the state representation map.

When a plurality of molding condition parameters is changed by the action a determined by the agent 16a, the change timing determining unit 16b refers to the table 12b and determines change timings of the plurality of parameters determined to be changed.

The parameter changing unit 16c sequentially changes the plurality of molding condition parameters determined to be changed according to the change timings determined by the change timing determining unit 16b. A timing at which setting of the molding condition parameters is actually changed is preferably after a weighing completion time of a molding material and before start of a next cycle. Then, the parameter changing unit 16c outputs a control signal based on the changed molding condition parameters to the injection unit 21 and the clamping device 22. The injection unit 21 and the clamping device 22 operate according to the control signal based on the changed molding condition parameters.

<Processing procedure (molding condition parameter adjustment method)>

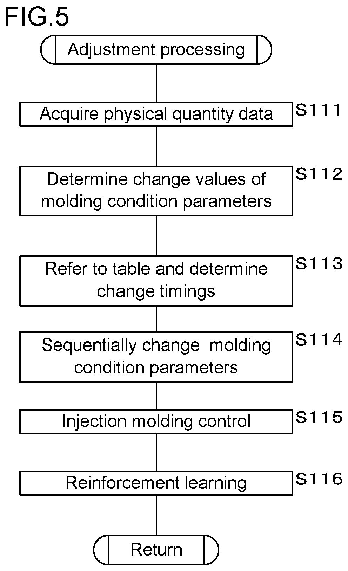

FIG. 5 is a flowchart illustrating a processing procedure of the processor 11 according to the first embodiment. It is assumed that initial values of the molding condition parameters are set in the injection molding machine 2, and the molding process cycle is repeated. The initial values of the molding condition parameters are adjusted according to the states of the injection molding machine 2 and the molded product.

When the injection molding machine 2 executes molding, the measurement unit 3 measures physical quantities related to the injection molding machine 2 and the molded product, and the processor 11 or the acquisition unit 14 as a functional unit acquires physical quantity data obtained by measurement by the measurement unit 3 (step S111).

Next, the processor 11 or the agent 16a determines change values of the molding condition parameters based on the acquired physical quantity data (step S112).

Specifically, the observation unit 15a of the control unit 15 generates observation data based on the acquired physical quantity data, and outputs the generated observation data to the agent 16a of the reinforcement learner 16.

The agent 16a of the reinforcement learner 16 acquires the observation data output from the observation unit 15a, and calculates change values (actions a) of the molding condition parameters of the injection molding machine 2 based on the observation data. The agent 16a outputs the calculated molding condition parameters (actions a) to the change timing determining unit 16b. It is preferable that the agent 16a selects an optimal action a in an operation phase (inference phase), and determines an exploratory action a in the learning phase in order to reinforcement-train the agent 16a. In addition, the agent 16a may use an objective function to select an action a with a small value of the objective function. The objective function is a function which value is smaller the higher the action value and the more unexplored the action is, and which value is larger when the amount of change from a current molding condition is greater than a predetermined range.

When there is a plurality of objects to be changed, the processor 11 or the change timing determining unit 16b completing processing of step S112 refers to the table 12b and determines change timings of the plurality of molding condition parameters, that is, a change order (step S113).

Then, the processor 11 or the parameter changing unit 16c sequentially changes the plurality of molding condition parameters to be changed according to the determined change timings (step S114). When the molding condition parameters are changed, the processor 11 or the parameter changing unit 16c outputs a control signal based on the molding condition parameters to the injection unit 21 and the clamping device 22 to control the operation of the injection molding machine 2 (step S115). The injection unit 21 and the clamping device 22 of the injection molding machine 2 perform injection molding processing according to the control signal based on the molding condition parameters output from the parameter changing unit 16c.

The processor 11 executes reinforcement learning processing for the agent 16a in the learning phase (step S116). Note that, when the plurality of molding condition parameters is changed to perform reinforcement learning for the agent 16a, a reward may be calculated to reinforcement-train the agent 16a after changing all the plurality of molding condition parameters in processing of steps S113 and S114. In addition, after changing all the plurality of molding condition parameters in processing of steps S113 and S114, a reward may be further calculated after a predetermined number of times to perform reinforcement learning. The predetermined number of times may be a different value depending on the plurality of molding condition parameters to be changed.

Specifically, in step S116, the measurement unit 3 measures physical quantities related to the injection molding machine 2 and the molded product after changing the molding condition parameters, and outputs the measured physical quantity data. The acquisition unit 14 acquires the physical quantity data, and the acquired physical quantity data is input to the observation unit 15a.

The observation unit 15a of the control unit 15 acquires the physical quantity data output from the measurement unit 3 via the acquisition unit 14, generates observation data based on the acquired physical quantity data, and outputs the generated observation data to the agent 16a of the reinforcement learner 16. Further, the reward calculation unit 15b calculates reward data determined according to defectiveness of the molded product based on the physical quantity data measured by the measurement unit 3, and outputs the calculated reward data to the reinforcement learner 16.

The agent 16a updates the model based on the observation data output from the observation unit 15a and the reward data output from the reward calculation unit 15b. When the agent 16a is the DQN, the DQN is trained using the value expressed by the above equation (1) as training data.

<Effects>

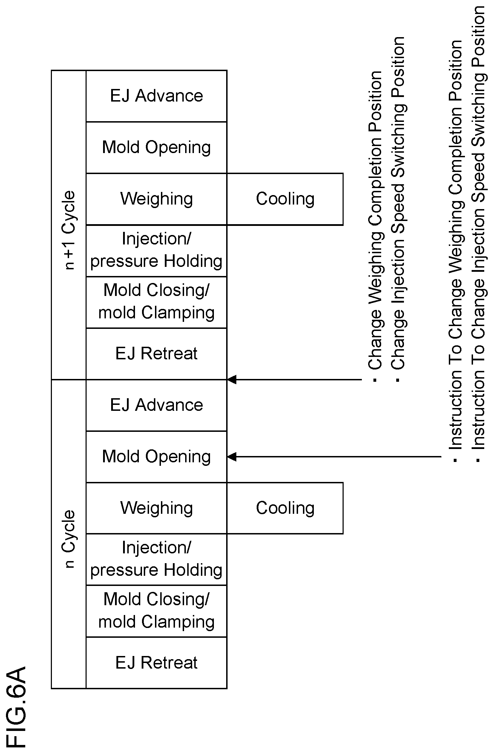

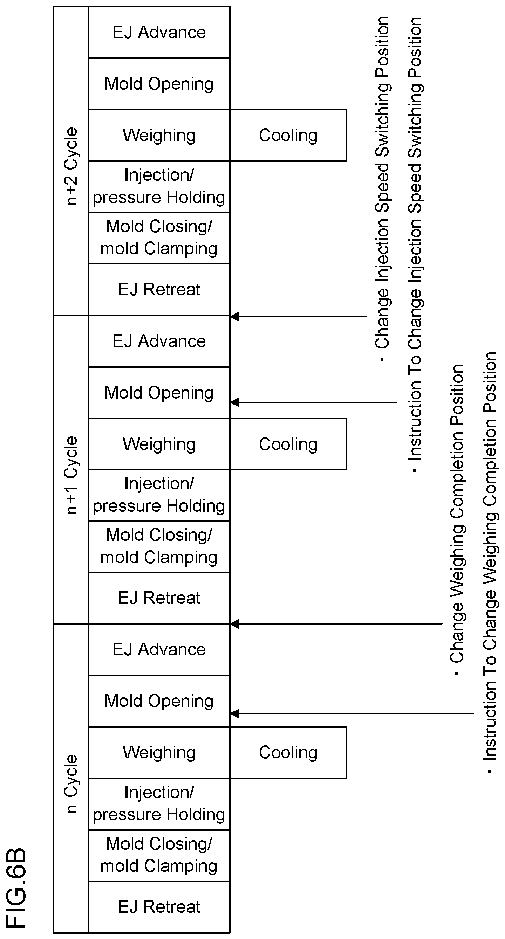

FIGS. 6A and 6B are explanatory diagrams illustrating effects of the molding condition parameter adjusting method according to the first embodiment. The effects of the molding condition parameter adjustment method according to the first embodiment will be described using, as an example, the case where the weighing completion position of the molding material and the injection speed switching position are changed as a plurality of molding condition parameters.

FIG. 6A illustrates a state in which the molding condition parameters are changed without considering the change timings, and FIG. 6B illustrates a state in which the molding condition parameters are changed in consideration of the change timings. Main processes in the molding process cycle include an eject retraction process ("EJ retreat" in FIG. 6A and FIG. 6B), a mold closing process, a mold clamping process, an injection process, a pressure holding process, a weighing process, a mold opening process, and an eject advance process ("EJ advance" in FIG. 6A and FIG. 6B), and the respective processes are sequentially performed.

When the "weighing completion position" and the "injection speed switching position" are changed, the "injection speed switching position" needs to be actually changed after the "weighing completion position" is first actually changed. As illustrated in FIG. 6A, it is assumed that an instruction to change the "weighing completion position" and an instruction to change the "injection speed switching position" are issued at the same time when an n-cycle weighing process is completed. In this case, upon completion of n-cycle eject advance, settings of the "weighing completion position" and the "injection speed switching position" are changed at the same time.

However, even though the "injection speed switching position" is actually changed, the actual position of the screw 21b according to the "weighing completion position" is not changed. In an n-cycle, weighing has already been completed using the molding condition parameter of the "weighing completion position" before change, and the position of the screw 21b at the start of an (n+1)-cycle is a position when controlled by the "weighing completion position" before parameter change. After changing setting of "weighing completion position", setting is reflected as the position of the screw 21b in the weighing process in the (n+1)-cycle, which is a process after the injection process in the (n+1)-cycle.

Therefore, in the (n+1)-cycle injection process, when only the "injection speed switching position" is actually changed while the "weighing completion position" is not actually reflected as the position of the screw 21b, unexpected defectiveness occurs. For example, a defect may occur where a degree of shorts is so severe that the molded product cannot be removed from the mold. In the worst case, there is concern that the mold may be damaged.

In order to prevent such a defect, in the first embodiment, the table 12b having information indicating a mutual relationship between change timings of a plurality of molding condition parameters is prepared. When the plurality of molding condition parameters is changed, the molding condition parameter adjustment device 1 refers to the table 12b and determines a change timing of each molding condition parameter. The molding condition parameter adjustment device 1 sequentially performs changes according to the determined change timings.

Specifically, when the "weighing completion position" and the "injection speed switching position" are changed, as illustrated in FIG. 6B, first, an instruction to change the "weighing completion position" is issued at the end of the weighing process in the current n-cycle. In this way, setting of the "weighing completion position" is changed upon completion of n-cycle eject advance, and the "weighing completion position" is actually changed and the molding material is weighed in an (n+1)-cycle weighing process. Meanwhile, an instruction to change the "injection speed switching position" is issued at the end of the weighing process in the (n+1)-cycle, which is one cycle after the time when the "weighing completion position" is changed. In this way, setting of the "injection speed switching position" is changed upon completion of (n+1)-cycle eject advance, and the "injection speed switching position" is actually changed and injection is performed in (n+2)-cycle injection and pressure holding processes.

Therefore, in the injection process, it is possible to avoid a situation where only the "injection speed switching position" is changed without the change in the "weighing completion position" being reflected in the position of the screw 21b.

According to the injection molding machine 2 according to the first embodiment, it is possible to adjust the plurality of molding condition parameters of the injection molding machine 2 in the molding process cycle in an appropriate order and timing, taking into consideration the mutual relationship between the plurality of molding process parameters.

Specifically, the molding condition parameter adjustment device 1 can change the weighing completion position

and the injection speed switching position at an appropriate timing and order.

Furthermore, the molding condition parameter adjustment device 1 can change the heating temperature and the injection speed switching position of the heating cylinder 21a at an appropriate timing and order.

Note that, even though a description has been given in the first embodiment using an example of changing the molding condition parameters in the operation phase or the learning phase of reinforcement learning, the invention can also be applied when the molding condition parameters are changed in other machine learning to be described later. Further, the invention can also be applied when changing the molding condition parameters in the case of creating a learning data set for machine learning. The invention can also be applied when it is necessary to change a plurality of molding condition parameters for any purpose not using machine learning.

In addition, even though a description has been given of an example in which a plurality of molding condition parameters is adjusted using reinforcement learning, the molding condition parameter adjustment device 1 may include a learner trained by supervised learning. The learner is a model that outputs a change value of a molding condition parameter that improves a state of a molded product when observation data is input. The learner may be a model having a CNN (Convolution Neural Network) such as ResNet or DenseNet that recognizes observation data, or may be a model having a recurrent neural network (RNN), LSTM, Vision Transformer, etc. that recognizes observation data that is time-series information when the observation data is time-series data. In addition, the learner may be configured using a learning model having a configuration other than the above-mentioned CNN, RNN, etc., such as a neural network, Vision Transformer, SVM (Support Vector Machine), Bayesian network, or a decision tree such as XGBoost.

In addition, even though the injection molding machine 2 that performs resin molding has been described as an example of a molding machine, the invention may also be applied to a hollow molding machine, a film molding machine, an extruder, a twin-screw extruder, a spinning extruder, a granulator, etc. Further, the molding material is not limited to resin, and the invention may be applied to a magnesium injection molding machine, etc.

[Description of Reference Numerals]

| | |
|---|---|
| 1 | Molding condition parameter adjustment device |
| 2 | Injection molding machine |
| 3 | Measurement unit |
| 4 | Recording medium |
| 11 | Processor |
| 12 | Storage unit |
| 12a | Computer program |
| 12b | Table |
| 13 | Operation unit |
| 14 | Acquisition unit |
| 15 | Control unit |
| 15a | Observation unit |
| 15b | Reward calculation unit |
| 16 | Reinforcement learner |
| 16a | Agent |
| 16b | Adjustment unit |
| 21 | Injection unit |
| 21a | Heating cylinder |
| 21b | Screw |
| 21c | Hopper |
| 21d | Heater |
| 22 | Clamping device |
| 23 | Control device |

**Claims**

1. A method of adjusting a plurality of molding condition parameters set in a molding machine in a molding process cycle, the method comprising:

    determining change values of the plurality of molding condition parameters;
    determining change timings of the plurality of parameters with reference to timing information when the change values of the plurality of molding condition parameters are determined, the timing information indicating a sequence relationship of the change timings of the plurality of parameters in the molding process cycle; and sequentially changing the plurality of parameters according to the determined change timings.

2. The method according to claim 1, wherein:

the molding machine is an injection molding machine (2) having a heating cylinder (21a) and a screw (21b) for weighing, plasticizing, and injecting a molding material,
the plurality of molding condition parameters includes a weighing completion position of the molding material and an injection speed switching position, and
the timing information includes information indicating that the weighing completion position is changed first and the injection speed is changed in a molding process cycle that is one molding process cycle after a molding process cycle in which the weighing completion position is changed.

3. The method according to claim 1 or 2, wherein:

the molding machine is an injection molding machine (2) having a heating cylinder (21a) and a screw (21b) for weighing, plasticizing, and injecting a molding material,
the plurality of molding condition parameters includes a heating temperature of the heating cylinder (21a) and an injection speed switching position, and
the timing information includes information indicating that the heating temperature of the heating cylinder (21a) is changed first and the injection speed is changed in a molding process cycle that is a predetermined number of times after a molding process cycle in which the heating temperature is changed.

4. A computer program for causing a computer to adjust a plurality of molding condition parameters set in a molding machine in a molding process cycle, the computer program causing the computer to perform processes of:

determining change values of the plurality of molding condition parameters;
determining change timings of the plurality of parameters with reference to timing information when the change values of the plurality of molding condition parameters are determined, the timing information indicating a sequence relationship of the change timings of the plurality of parameters in the molding process cycle; and
sequentially changing the plurality of parameters according to the determined change timings.

5. A molding condition parameter adjustment device (1) configured to adjust a plurality of molding condition parameters set in a molding machine, the molding condition parameter adjustment device (1) comprising:

a storage unit (12) configured to store timing information indicating a sequence relationship of change timings of the plurality of parameters in a molding process cycle; and
a processor (11), wherein the processor (11) is configured to:

determine change values of the plurality of molding condition parameters in the molding process cycle,
determine the change timings of the plurality of parameters with reference to the timing information stored by the storage unit (12) when the change values of the plurality of molding condition parameters are determined, and
sequentially change the plurality of parameters according to the determined change timings.

6. A molding machine operating according to a plurality of set molding condition parameters, the molding machine comprising:

the molding condition parameter adjustment device (1) according to claim 5,
wherein the molding machine is configured to change the plurality of molding condition parameters by the molding condition parameter adjustment device (1).

**Patentansprüche**

1. Verfahren zum Anpassen einer Vielzahl von Formbedingungenparametern, die in einer Formmaschine in einem Formprozesszyklus eingestellt sind, wobei das Verfahren umfasst:

EP 4 397 468 B1

Bestimmen von Änderungswerten der Vielzahl von Formbedingungenparametern;
Bestimmen von Änderungszeitpunkten der Vielzahl von Parametern unter Bezugnahme auf Zeitinformationen, wenn die Änderungswerte der Vielzahl von Formbedingungenparametern bestimmt werden, wobei die Zeitinformationen eine Reihenfolgebeziehung der Änderungszeitpunkte der Vielzahl von Parametern im Formprozesszyklus angeben; und
sequentielles Ändern der Vielzahl von Parametern gemäß den bestimmten Änderungszeitpunkten.

2. Verfahren nach Anspruch 1, wobei:

die Formmaschine eine Spritzgießmaschine (2) mit einem Heizzylinder (21a) und einer Schnecke (21b) zum Wiegen, Plastifizieren und Einspritzen eines Formmaterials ist,
die Vielzahl von Formbedingungenparametern eine Wiegeendposition des Formmaterials und eine Einspritzgeschwindigkeits-Umschaltposition umfassen, und
die Zeitinformationen Informationen umfassen, die angeben, dass die Wiegeendposition zuerst geändert wird und die Einspritzgeschwindigkeit in einem Formprozesszyklus geändert wird, der ein Formprozesszyklus nach einem Formprozesszyklus ist, in dem die Wiegeendposition geändert wird.

3. Verfahren nach Anspruch 1 oder 2, wobei:

die Formmaschine eine Spritzgießmaschine (2) mit einem Heizzylinder (21a) und einer Schnecke (21b) zum Wiegen, Plastifizieren und Einspritzen eines Formmaterials ist,
die Vielzahl von Formbedingungenparametern eine Heiztemperatur des Heizzylinders (21a) und eine Einspritzgeschwindigkeits-Umschaltposition umfassen, und
die Zeitinformationen Informationen umfassen, die angeben, dass die Heiztemperatur des Heizzylinders (21a) zuerst geändert wird und die Einspritzgeschwindigkeit in einem Formprozesszyklus geändert wird, der eine vorbestimmte Anzahl von Malen nach einem Formprozesszyklus erfolgt, in dem die Heiztemperatur geändert wird.

4. Computerprogramm, das einen Computer veranlasst, eine Vielzahl von Formbedingungenparametern anzupassen, die in einer Formmaschine in einem Formprozesszyklus eingestellt sind, wobei das Computerprogramm den Computer veranlasst, folgende Prozesse auszuführen:

Bestimmen von Änderungswerten der mehreren Formbedingungenparameter;
Bestimmen von Änderungszeitpunkten der mehreren Parameter unter Bezugnahme auf Zeitinformationen, wenn die Änderungswerte der mehreren Formbedingungenparameter bestimmt werden, wobei die Zeitinformationen eine Reihenfolgebeziehung der Änderungszeitpunkte der mehreren Parameter im Formprozesszyklus angeben; und
sequentielles Ändern der mehreren Parameter gemäß den ermittelten Änderungszeitpunkten.

5. Vorrichtung (1) zur Anpassung von Formbedingungsparametern, die eingerichtet ist, eine Vielzahl von Formbedingungenparametern anzupassen, die in einer Formmaschine eingestellt sind, wobei die Vorrichtung (1) zur Anpassung von Formbedingungsparametern umfasst:

eine Speichereinheit (12), die eingerichtet ist, Zeitinformationen zu speichern, die eine Reihenfolgebeziehung der Änderungszeitpunkte der Vielzahl von Parametern in einem Formprozesszyklus angeben; und
einen Prozessor (11), wobei der Prozessor (11) eingerichtet ist:

Änderungswerte der Vielzahl von Formbedingungenparametern im Formprozesszyklus zu bestimmen,
die Änderungszeitpunkte der Vielzahl von Parametern unter Bezugnahme auf die von der Speichereinheit (12) gespeicherten Zeitinformationen zu bestimmen, wenn die Änderungswerte der Vielzahl von Formbedingungenparametern bestimmt werden, und
die Vielzahl von Parametern gemäß den bestimmten Änderungszeitpunkten sequenziell zu ändern.

6. Formmaschine, die gemäß einer Vielzahl von eingestellten Formbedingungenparametern arbeitet, wobei die Formmaschine umfasst:

die Vorrichtung (1) zur Anpassung von Formbedingungsparametern gemäß Anspruch 5,
wobei die Formmaschine eingerichtet ist, die Vielzahl von Formbedingungenparametern durch die Vorrichtung (1) zur Anpassung von Formbedingungsparametern zu ändern.

**Revendications**

1. Procédé d'ajustement d'une pluralité de paramètres de conditions de moulage définis dans une machine de moulage au cours d'un cycle de moulage, le procédé comprenant :

   la détermination des valeurs de changement de la pluralité de paramètres de conditions de moulage ;
   la détermination des moments de changement de la pluralité de paramètres en référence à des informations de synchronisation lorsque les valeurs de changement de la pluralité de paramètres de condition de moulage sont déterminées, les informations de synchronisation indiquant une relation de séquence entre les moments de changement de la pluralité de paramètres dans le cycle de processus de moulage ; et
   modifier séquentiellement la pluralité de paramètres en fonction des moments de modification déterminés.

2. Procédé selon la revendication 1, dans lequel :

   la machine de moulage est une machine de moulage par injection (2) comportant un cylindre chauffant (21a) et une vis (21b) pour peser, plastifier et injecter un matériau de moulage,
   la pluralité de paramètres de condition de moulage comprend une position de fin de pesage du matériau de moulage et une position de commutation de la vitesse d'injection, et
   les informations de synchronisation comprennent des informations indiquant que la position d'achèvement de pesage est modifiée en premier et que la vitesse d'injection est modifiée dans un cycle de moulage qui est un cycle de moulage après un cycle de moulage dans lequel la position d'achèvement de pesage est modifiée.

3. Procédé selon la revendication 1 ou 2, dans lequel :

   la machine de moulage est une machine de moulage par injection (2) comportant un cylindre de chauffage (21a) et une vis (21b) pour peser, plastifier et injecter un matériau de moulage, la pluralité de paramètres de condition de moulage comprend une température de chauffage du cylindre de chauffage (21a) et une position de commutation de vitesse d'injection, et
   les informations de synchronisation comprennent des informations indiquant que la température de chauffage du cylindre de chauffage (21a) est modifiée en premier et que la vitesse d'injection est modifiée dans un cycle de moulage qui est un nombre prédéterminé de fois après un cycle de moulage dans lequel la température de chauffage est modifiée.

4. Programme informatique destiné à amener un ordinateur à ajuster une pluralité de paramètres de conditions de moulage définis dans une machine de moulage dans un cycle de processus de moulage, le programme informatique amenant l'ordinateur à effectuer les processus suivants :

   déterminer les valeurs de changement de la pluralité de paramètres de condition de moulage ;
   déterminer les moments de modification de la pluralité de paramètres en se référant à des informations de synchronisation lorsque les valeurs de modification de la pluralité de paramètres de condition de moulage sont déterminées, les informations de synchronisation indiquant une relation de séquence entre les moments de modification de la pluralité de paramètres dans le cycle de processus de moulage ; et
   modifier séquentiellement la pluralité de paramètres en fonction des moments de modification déterminés.

5. Dispositif de réglage des paramètres de condition de moulage (1) configuré pour régler une pluralité de paramètres de condition de moulage définis dans une machine de moulage, le dispositif de réglage des paramètres de condition de moulage (1) comprenant :

   une unité de stockage (12) configurée pour stocker des informations de synchronisation indiquant une relation séquentielle entre les moments de changement de la pluralité de paramètres dans un cycle de processus de moulage ; et
   un processeur (11), dans lequel le processeur (11) est configuré pour :

      déterminer les valeurs de changement de la pluralité de paramètres de conditions de moulage dans le cycle de processus de moulage,

déterminer les moments de changement de la pluralité de paramètres en se référant aux informations de synchronisation stockées par l'unité de stockage (12) lorsque les valeurs de changement de la pluralité de paramètres de condition de moulage sont déterminées, et

modifier séquentiellement la pluralité de paramètres en fonction des moments de modification déterminés.

6. Machine de moulage fonctionnant selon une pluralité de paramètres de conditions de moulage définis, la machine de moulage comprenant :

le dispositif de réglage des paramètres de condition de moulage (1) selon la revendication 5, dans lequel la machine de moulage est configurée pour modifier la pluralité de paramètres de condition de moulage par le dispositif de réglage des paramètres de condition de moulage.

FIG.1

21c

21

22

21d

21b  21a

2

Control Device

23

1

Molding
Condition
Parameter
Adjustment
Device

Measurement
Unit

3

FIG.2

Molding Condition Parameter Adjustment Device — 1

Processor — 11

Measurement Unit → Acquisition Unit (14) → Control Unit (15) ↔ Reinforcement Learner (16)

Injection Unit Clamping Device ←

Storage Unit — 12

Computer Program — 12a
Table — 12b

4

Operation Unit — 13

EP 4 397 468 B1

## FIG.3A

12b

| First molding condition parameter / Second molding condition parameter | P1 | P2 | P3 | ... |
|---|---|---|---|---|
| P1 | — | — | — | — |
| P2 | Change after one cycle | — | — | — |
| P3 | Change after N cycles | Change after N cycles | — | — |
| ... | ... | ... | ... | ... |

## FIG.3B

12b

| First molding condition parameter / Second molding condition parameter | ... | Weighing completion position of molding material | Heating temperature of heating cylinder | ... |
|---|---|---|---|---|
| ... | ... | ... | ... | ... |
| Injection speed switching position | ... | Change after one cycle | Change after N cycles | ... |
| ... | ... | ... | ... | ... |

# FIG.4

# FIG.5

```
        ⊂ Adjustment processing ⊃

        ┌─────────────────────────┐
        │ Acquire physical quantity data │  S111
        └─────────────────────────┘

        ┌─────────────────────────┐
        │   Determine change values of   │  S112
        │   molding condition parameters │
        └─────────────────────────┘

        ┌─────────────────────────┐
        │   Refer to table and determine │  S113
        │       change timings       │
        └─────────────────────────┘

        ┌─────────────────────────┐
        │  Sequentially change  molding │  S114
        │     condition parameters    │
        └─────────────────────────┘

        ┌─────────────────────────┐
        │    Injection molding control   │  S115
        └─────────────────────────┘

        ┌─────────────────────────┐
        │     Reinforcement learning    │  S116
        └─────────────────────────┘

             ⊂ Return ⊃
```

FIG.6A

# FIG.6B

| n Cycle | | | | | | n+1 Cycle | | | | | | n+2 Cycle | | | | | |
|---|---|---|---|---|---|---|---|---|---|---|---|---|---|---|---|---|---|
| EJ Retreat | Mold Closing/ mold Clamping | Injection/ pressure Holding | Weighing | Mold Opening | EJ Advance | EJ Retreat | Mold Closing/ mold Clamping | Injection/ pressure Holding | Weighing | Mold Opening | EJ Advance | EJ Retreat | Mold Closing/ mold Clamping | Injection/ pressure Holding | Weighing | Mold Opening | EJ Advance |
| | | | Cooling | | | | | | Cooling | | | | | | Cooling | | |

· Change Injection Speed Switching Position

· Instruction To Change Injection Speed Switching Position

· Change Weighing Completion Position

· Instruction To Change Weighing Completion Position

EP 4 397 468 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019166702 A

- JP 2021066084 A